(19) Europäisches Patentamt
European Patent Office
Office européen des brevets

(11) **EP 0 588 236 B1**

(12) **EUROPEAN PATENT SPECIFICATION**

(45) Date of publication and mention
of the grant of the patent:
**30.12.1998 Bulletin 1998/53**

(51) Int Cl.⁶: **G01N 35/10**, B01L 11/00,
F04B 43/08, F04B 49/00,
B01L 3/02

(21) Application number: **93114488.5**

(22) Date of filing: **09.09.1993**

(54) **Liquid dispensing apparatus**

Flüssigkeitsabgabevorrichtung

Dispositif de distribution de liquides

(84) Designated Contracting States:
**DE FR GB IT**

(30) Priority: **18.09.1992 JP 249881/92**

(43) Date of publication of application:
**23.03.1994 Bulletin 1994/12**

(73) Proprietors:
• **MITSUBISHI KAGAKU BIO-CLINICAL
LABORATORIES, INC.
Itabashi-ku, Tokyo (JP)**
• **DAISEN SANGYO CO., LTD.
Osaka-shi, Osaka-fu (JP)**
• **TAFUTO CO., LTD.
Tokyo (JP)**

(72) Inventors:
• **Nakayama, Naoki
Wako-shi, Saitama-ken (JP)**
• **Takao, Hiroshi, c/o TAFUTO CO., LTD.
Toshima-ku, Tokyo (JP)**

(74) Representative: **Füchsle, Klaus, Dipl.-Ing. et al
Hoffmann Eitle,
Patent- und Rechtsanwälte,
Arabellastrasse 4
81925 München (DE)**

(56) References cited:
**EP-A- 0 182 943          EP-A- 0 283 614
WO-A-88/08985          FR-A- 2 447 751
FR-A- 2 553 151          GB-A- 1 141 800**

## Description

### BACKGROUND OF THE INVENTION

This invention relates to a liquid-dispensing apparatus which can be applied to handling of a liquid for research, development, production and inspection in science and engineering, medical science and production techniques.

As a representative example of a conventional apparatus, there may be mentioned a liquid-dispensing apparatus which is used for clinical tests. In the apparatus, in order to prevent contamination between samples to be tested, a sampling chip which is not contaminated with a previous sample is required to be used for each dispension, and a sampling chip such as a plastic molded product prepared by injection molding has been generally used, but such a sampling chip is extremely expensive.

As a sample-sucking mechanism, there may be mostly used a mechanism using a cylinder. An apparatus using such a mechanism is expensive and it is necessary to fit the above sampling chip to a nozzle at the end of a cylinder each time.

When a liquid is sucked by a cylinder, even a slight failure of fitting causes leakage of air at a fitting portion so that there are drawbacks in that a reduced pressure state cannot be maintained and inaccuracy in sucked in amounts will then occur.

Further, it is necessary to put sampling chips in a chip rack by hand or by a machine so that there is a great economical loss.

### PRIOR ART

FR-A-2 447 751 is of interest in that it discloses a liquid sampling apparatus in which a squeezable tube passes downwardly through a vertically movable guide until the lower end of the squeezable tube depends to a desired extent into a liquid sample in a receptacle positioned below said guide. Various methods for causing liquid to rise up into the squeezable tube from said liquid sample are disclosed, one of which is to first squeeze a length of the tube and then to release the squeezing effect, this presupposes that during these operations the tube is choked somewhere above said squeezing means. The squeezable tube is then raised up from said container and moved to a setting wherein the lower end of the squeezable tube is positioned over a liquid receiving receptacle. The squeezable tube is then squeezed again along said length thereof to empty it.

The now empty tube is raised upwardly to a setting where cutting jaws cut-off the now wetted extent of the lower end of the squeezable tube. The process is then repeated.

There is no particular disclosure in the description of the aforesaid guide except that it is stated that the squeezable tube slides in the guide. Guidance as to the guide's dimensions can only be drawn from the drawings in which its axial length is illustrated as being less than its outer diameter. This fact is of interest as will be apparent from the description of the present invention that follows hereinafter. Such a guide cannot be regarded as being a tube as defined by the Oxford Concise Dictionary, namely that a tube is a long hollow cylinder.

It is stated in FR-A-2 447 751 that the squeezable tube can be driven by means of toothed wheels or mobile gripping means; and that a wetted end of the tube can be cut off by any suitable means.

It is of interest to note that in this prior art the length of the squeezable tube that projects downwardly beyond the lower end of the guide as the guide lowers the squeezable tube into a test tube-like container of liquid is illustrated as being approximately four and a half times the axial length of the tube guide.

EP-A-0 182 943 is concerned with a micro-pipette of synthetic polymeric material and a device for its manufacture. The micro-pipette is characterized by comprising a long "nose" region of small internal diameter uniform along its length. This prior art, however, additionally discloses a device for adjusting samples of liquid test material to exact subdivision within an array of like receivers, characterised in that it comprises: a vertically movable carriage; an inclined array of piston/cylinder arrangements each individually attached to draw up or express liquid from a micro-pipette dispenser formed as described above; and an operating rod parallel to each piston having an arcuate surface at or near its upper end upon which the downward motion of the vertically movable carriage can be transferred by virtue of horizontally pivoted push members each having an individual adjustment means to adjust the initial inclination of its undersurface against the respective rod arcuate surface, whereby a uniform vertical movement of the carriage is individually and closely adjustable to provide different length strokes of each operating rod and thus adjust for differences in pipette volume. A moving band, of a width equal to the width of said inclined array of piston/cylinder arrangements, travels in a direction from behind said array, under said array, and then forwardly away from said array. The moving band carries multichambered sample containers into which said "nose" region of said micro-pipettes can dip and retract.

WO 88/08985 discloses a liquid boundary level detector employing an open-ended conduit which directs pressure waves toward a liquid boundary layer. The conduit is moved from a starting position toward the liquid boundary and, upon contact with the boundary, there is a change in acoustic impedance within the conduit. This change is monitored and a signal is generated indicative of such contact. Once the initial liquid boundary position is determined, it may become the reference position for subsequent liquid boundary measurements or motions.

## SUMMARY OF THE INVENTION

An object of the present invention is to provide a liquid-dispensing apparatus that does not use an expensive sampling chip such as a plastic molded product prepared by injection molding and does not employ an expensive liquid-sucking system using a cylinder.

The present invention has been made based on conceptions that a long tube having a substantially constant inner diameter and made of an elastic material having elasticity is used in place of a conventional sampling chip, and when an end portion of the tube has been used it is cut off.

That is, the dispensing apparatus of the present invention has a mechanism in which an end portion of a tube is used as a sampling chip, an upper portion of the tube is squeezed by pressing and releasing movements to suck and discharge a liquid, at least a length of the tube which has been contaminated with a sample to be tested (specimen) is cut off by a cutting means, for example a cutter, after each dispension; and a new tube portion is supplied at the next dispension.

In a first embodiment the liquid-dispensing apparatus of the present invention comprises;

a tube made of an elastic material;
a guide through which the elastic tube is slidable in a downward direction;
means for lowering and raising the guide;
a tube choking means;
a tube cutting means serving to cut off a used length of said tube; and
a tube-squeezing means below said tube choking means and adapted for squeezing an extent of the elastic tube to expel air therefrom before the lower end of the tube has been moved downwardly into a liquid container; and adapted to release the squeezing effect after the lower end of the tube has descended into the liquid in the liquid container to draw liquid up into the tube;

and further in that:

said guide is in the form of a tube nozzle portion;
said means for lowering and raising the tube nozzle portion comprises a frame portion on which is mounted said tube nozzle portion;
means for moving said frame portion up and down , and from side to side;
tube-feeding means which holds and feeds the tube of elastic material from a reel, around which the tube is wound, to tube conveying means;
said tube-squeezing means and said tube conveying means being mounted on said frame portion;
said dispensing apparatus additionally comprising a liquid container conveying means which holds a liquid container and is capable of positioning the liquid container under the tube nozzle portion.

In a second embodiment of the present invention the liquid-dispensing apparatus comprises;

a tube made of elastic material;
a guide through which said elastic tube is slidable in a downward direction;
means for lowering and raising the guide;
a tube cutting means serving to cut off a used length of said tube;
a tube-squeezing means adapted for squeezing an extent of the elastic tube to expel air therefrom before the lower end of the tube has been moved downwardly into a liquid container; and adapted to release the squeezing effect after the lower end of the tube has descended into the liquid in the liquid container to draw liquid up into the tube;

and further in that:

said guide is in the form of a tube nozzle portion;
said tube-squeezing means includes a pressing roller capable of rolling along a portion of the elastic tube length to expel air therefrom; and adapted to roll along said portion of the elastic tube length in a reverse direction to draw liquid up into said tube;
said means for lowering and raising the tube nozzle portion comprises a frame portion on which is mounted said tube nozzle portion;
means for moving said frame portion up and down, and from side to side;
tube-feeding means which holds and feeds the tube of elastic material from a reel, around which said tube is wound, to tube conveying means;
said tube-squeezing means and said tube conveying means being mounted on said frame portion;
said dispensing apparatus additionally comprising a liquid container conveying means adapted to hold a liquid container under the tube nozzle portion.

By using the above mechanism, the dispensing apparatus of the present invention uses a simple mechanism as compared with a complicated mechanism of a conventional dispensing apparatus so that a price thereof is inexpensive. Further, a long tube of which a used portion is cut each time is used as a sampling chip so that cost is extremely low as compared with the case of using a conventional sampling chip.

## BRIEF DESCRIPTION OF THE DRAWINGS

Fig. 1 is a view showing a construction of a first example of the dispensing apparatus according to the present invention.

Fig. 2 is a sectional view of Fig. 1 cut along with A-A' line.

Fig. 3 is a perspective view of a positioning device of a liquid container.

Fig. 4 is a view illustrating movements of the dispensing apparatus according to the present invention.

Fig. 5 is a view illustrating movements of the dispensing apparatus according to the present invention.

Fig. 6 is a view illustrating movements of the dispensing apparatus according to the present invention.

Fig. 7 is a view illustrating movements of the dispensing apparatus according to the present invention.

Fig. 8 is a view illustrating movements of the dispensing apparatus according to the present invention.

Fig. 9 is a view illustrating movements of the dispensing apparatus according to the present invention.

Fig. 10 is a partial view illustrating a second example of the present invention.

Fig. 11 is a partial view illustrating said second example of the present invention.

EXAMPLES

Examples of the present invention are described in detail by referring to the drawings.

Example 1

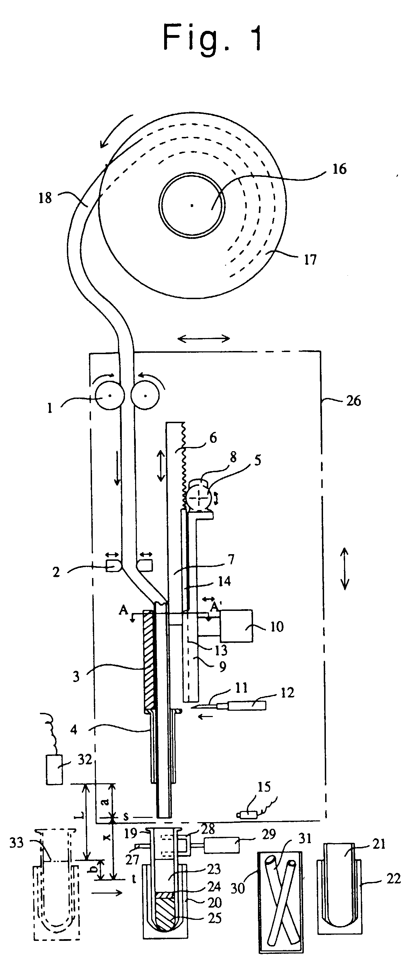

Fig. 1 is a view showing a constitution of a first example of the dispensing apparatus according to the present invention.

A tube 18 to be used in the present invention may be any tube having such elasticity that it can be choked by applying pressure from outside and can be substantially recovered by removing pressure, and a material and a preparation method thereof are not limited. For example, a vinyl tube prepared by extrusion molding may be used.

In Fig. 1, the tube 18 having elasticity wound around a reel 17 is introduced from a tube-feeding axis 16 to a tube nozzle portion 4 through tube-conveying rollers 1 and a tube-choking means (pinch bars) 2.

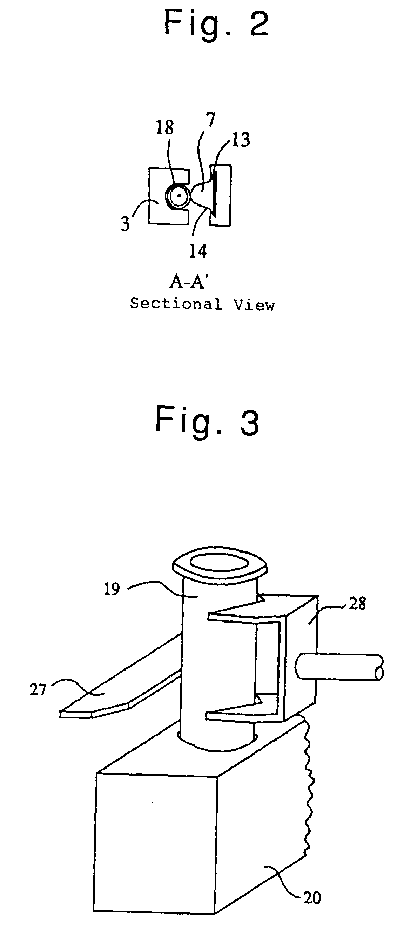

Relation between a tube-pressing back device 3 and a tube-pressing device 7, and the tube 18 is as described below. As shown in Fig. 1 and Fig. 2, the tube 18 is introduced between the tube-pressing device 7 and the tube-pressing back device 3, and by pressing and releasing movements to the tube-pressing back device 3 by operations of a pressurizing device 9 which is linked to a pressurizing cylinder 10 and the tube-pressing device 7, the tube 18 can suck and discharge a liquid.

A rack 6 is formed at an upper portion of the tube-pressing device 7 and engaged with a pinion 5 which is driven by a pinion-driving portion 8. By rotation of the pinion 5 and up and down movement of the rack 6, the tube-pressing device 7 is moved up and down, whereby a sucking amount can be set.

A sliding portion 14 provided on the side of the tube-pressing device 7 slides on a sliding rail 13 of the pressurizing device 9 so that the tube-pressing device 7 can be moved up and down smoothly.

Further, the tube 18 is cut by a cutting means 11 which is linked to a cutting air cylinder 12 each time after predetermined dispensing movements, and a cut tube is discarded into a discarded-tube container 30. Here, the cutting means 11 may be any means so long as it can cut a tube made of an elastic material. For example, a cutter with a blade may be used. When a hot wire cutting means or a laser beam cutting means is used, sterilizing and disinfecting effects can be obtained.

To a moving frame portion 26 are provided the tube-conveying rollers 1, the tube-choking means 2, the tube-pressing back device 3, the tube nozzle portion 4, the pinion 5, the tube-pressing device 7, the pinion-driving portion 8, the pressurizing device 9, the pressurizing cylinder 10, the cutting means 11, the cutting air cylinder 12 and a photosensor 15. The moving frame portion 26 can be moved up and down and from side to side by a driving portion not shown in Fig. 1. In Example 1, the moving frame portion 26 is equipped with the cutting means 11 and the cutting air cylinder 12, but the present invention is not limited to this embodiment. If necessary, the cutting means 11 and the cutting air cylinder 12 may be provided outside the moving frame portion 26 and above the discarded-tube container 30.

In this example, a sample rack 20 which holds a liquid container 19 in which a sample is charged is supplied to a sample-conveying portion not shown in Fig. 1, and before the sample rack 20 is set just under the tube nozzle portion 4, a distance L from a lower end of the an ultrasonic sensor 32 to a liquid surface 33 is measured by the ultrasonic sensor 32.

As shown in Fig. 1 and Fig. 3, the liquid container 19 supplied is fixed at a predetermined position by a positioning guide 27 and a positioning device 28 which is linked to a positioning air cylinder 29.

Among samples, for example, blood for biochemical inspection is previously centrifuged so that a serum 23 and a blood clot 25 are separated by a separator 24 as shown in Fig. 1.

A lowering distance x of the end of the tube 18 when a liquid is sampled is represented by the following equation using a distance a between an end position s of the tube 18 and an end position of the ultrasonic sensor 32, a depth b of inserting the end of the tube 18 into the serum 23 and the distance L described above:

$$x = L + b - a$$

The above operation is carried out by using a calculating means not shown in Fig. 1, data obtained is given to the driving portion of the moving frame portion 26, the moving frame portion 26 is lowered to lower the end of the tube 18, and then sucking is carried out.

Next, movements of the dispensing apparatus of the present invention are described.

As shown in Fig. 1, the distance L to the liquid surface 33 of the liquid container 19 (a lid of which has been taken off) put in the sample rack 20 is measured by the ultrasonic sensor 32 in the course of supplying the liquid container 19 by the sample-conveying portion, the lowering distance x of the end of the tube 18 is calculated according to the equation of $x = L + b - a$ by the calculating means not shown in Fig. 1, and information obtained is given to the driving portion of the moving frame portion 26.

Then, the sample rack 20 is conveyed just under the end of the tube 18, entered between the positioning guide 27 and the positioning device 28 and fixed at a predetermined position by operation of the positioning device 28.

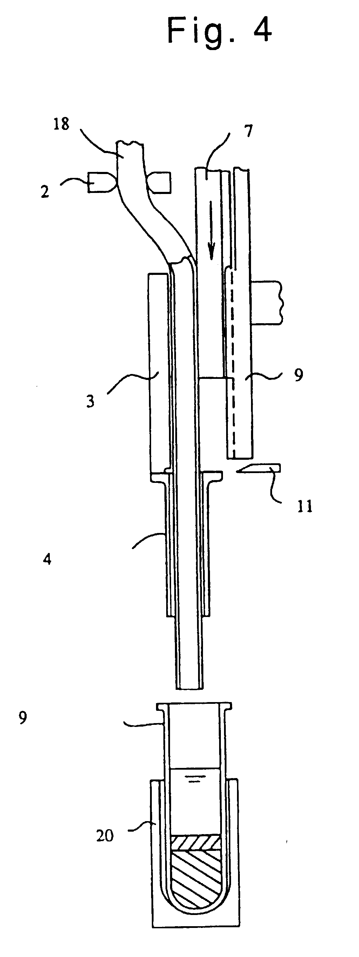

Then, as shown in Fig. 4, the tube-pressing device 7 is so lowered that a predetermined amount is to be sucked.

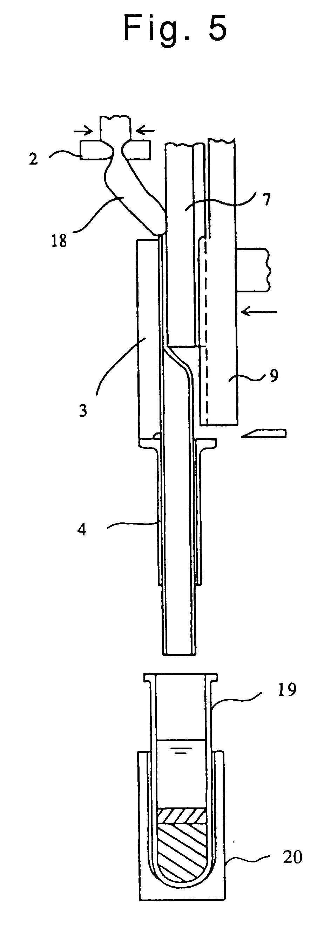

Then, as shown in Fig. 5, the tube 18 is sandwiched by the tube-choking means 2 to intercept air stream in the tube 18 and at the same time, the pressurizing device 9 is pushed leftward to push the tube 18 against the tube-pressing back device 3 by the tube-pressing device 7, whereby the tube 18 is choked.

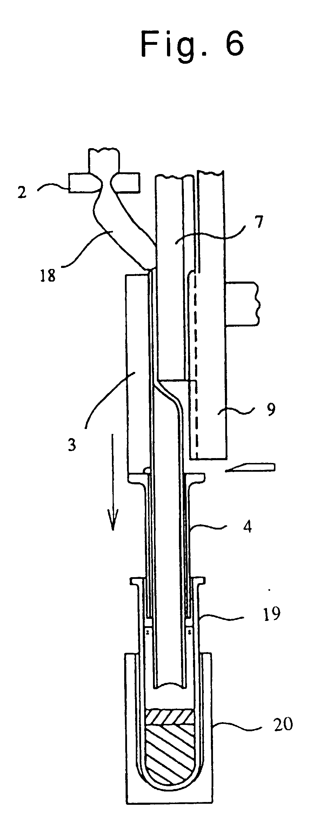

Then, as shown in Fig. 6, the moving frame portion 26 is lowered with the lowering distance x described above, and the end of the tube 18 is inserted into the serum 23 in the liquid container 19.

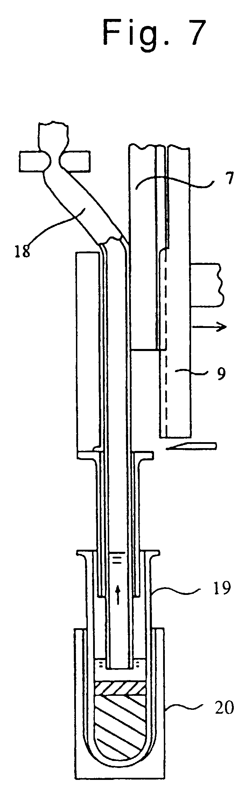

Then, as shown in Fig. 7, the pressurizing device 9 is moved rightward, and the tube-pressing device 7 releases the tube 18.

The tube 18 made of an elastic material is recovered by releasing a pressed portion thereof to reduce pressure of an inner portion of the tube 18, whereby the serum 23 is sucked.

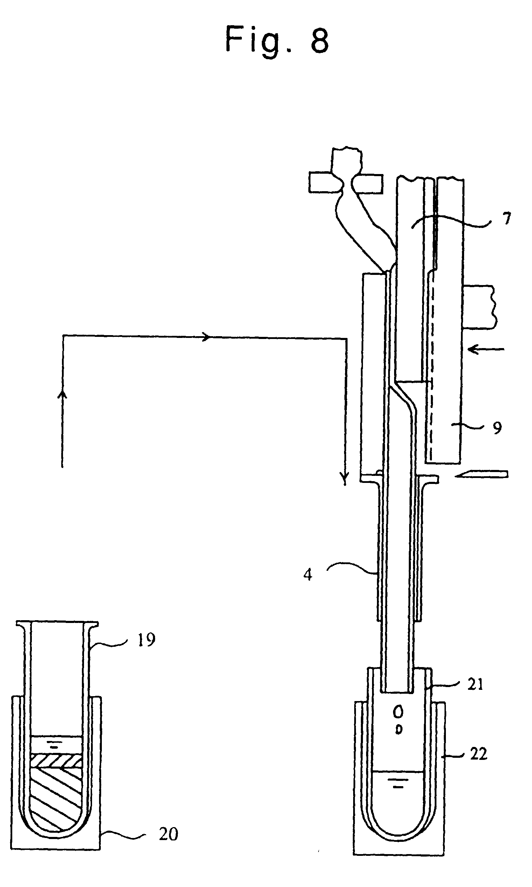

Then, as shown in Fig. 8, after the moving frame portion 26 is lifted, moved rightward and lowered to insert the end of the tube 18 into a dispension vessel 21 put in a dispension rack 22, the pressurizing device 9 is moved leftward to push the tube 18 against the tube-pressing back device 3 by the tube-pressing device 7 to press and choke the tube 18, whereby the serum 23 in the tube 18 is discharged into the dispension vessel 21.

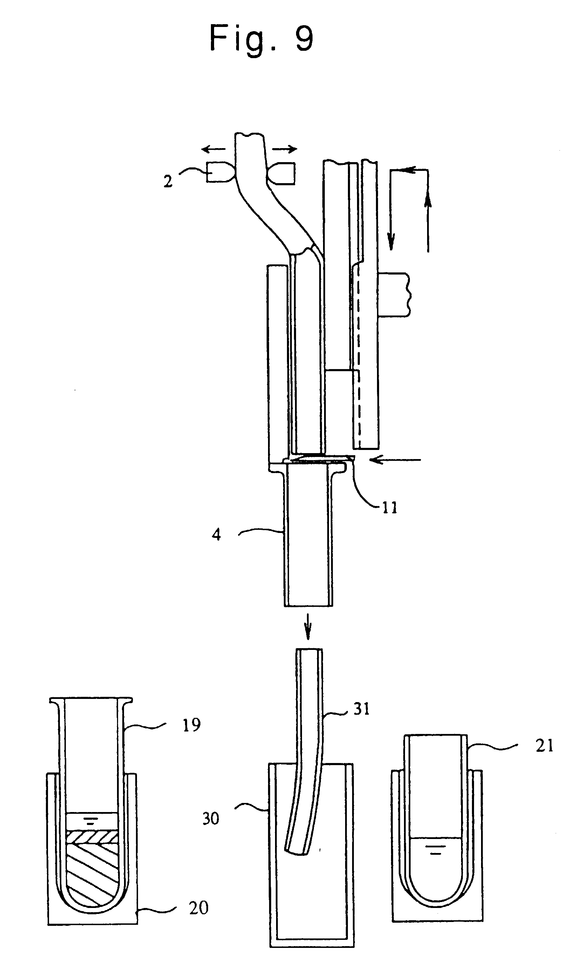

Then, as shown in Fig. 9, the moving frame portion 26 is lifted, moved leftward, stopped with the tube nozzle portion 4 above the discarded-tube container 30, then lowered and stopped when the end of the tube 18 enters into the discarded-tube container 30.

Then, after the tube-choking means 2 releases the tube 18 and, if necessary, the tube 18 is conveyed downward by the tube-conveying rollers 1, the tube 18 is cut at a predetermined position by operation of the cutting means 11.

The cut tube 18 is discarded into the discarded-tube container 30 as a discarded tube 31.

Then, the tube 18 is conveyed by the tube-conveying rollers 1 until a cut surface thereof reaches a sensing level s of the photosensor 15.

Then, the moving frame portion 26 is lifted, moved leftward, stopped when the tube nozzle portion 4 is above a fresh liquid container 19 positioned at the guide 27, lowered and stopped at a predetermined position to complete one cycle.

## Example 2

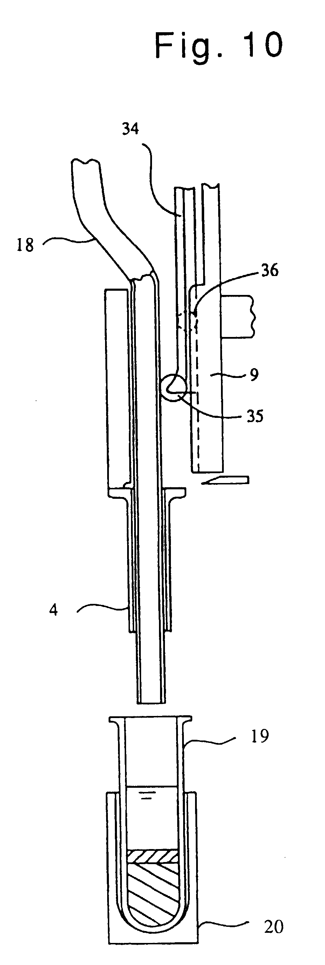

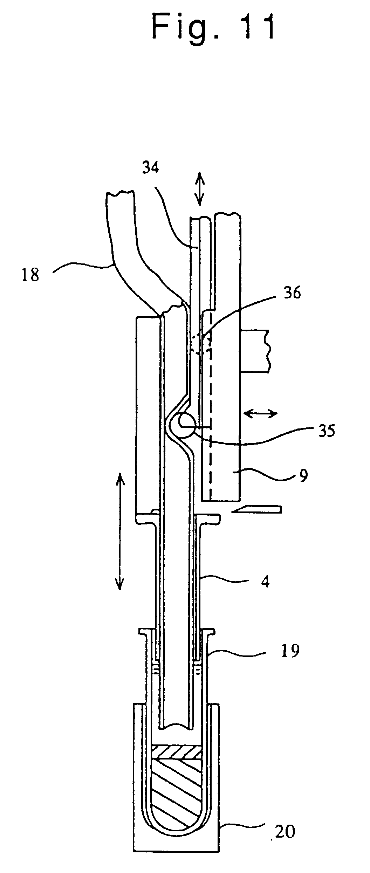

As a method of sucking and discharging a predetermined amount, as shown in Fig. 10 and Fig. 11, a method of squeezing by a pressing roller 35 attached to a pressing-roller support 34 may be used without any problem.

That is, in the same manner as in Example 1, an upper portion of the pressing-roller support 34 is the rack 6, and the rack 6 is interlocked with the pinion 5.

The pressing roller 35 is fitted to a lower portion of the pressing-roller support 34, and the same sliding portion and sliding rail as in Example 1 are used.

Further, a back roller 36 is provided for the purpose of reducing friction resistance given to the pressurizing device 9 by reaction applied to the pressing-roller support 34 when the pressurizing device 9 is moved leftward and the the pressing roller 35 is moved up and down while pressing the tube 18.

Movements of Example 2 are described below. That is, the pressing roller 35 is lowered and stopped at a predetermined position. After the pressurizing device 9 is moved leftward to press and choke the tube 18, the moving frame portion 26 is lowered and the end of the tube 18 is inserted into the serum 23. Then, the pressing roller 35 is lifted while rotating to squeeze the tube 18 so that a volume of a portion of the tube 18 below the pressing roller 35 is increased gradually, whereby the serum 23 is sucked. After the moving frame portion 26 is lifted, moved rightward and then lowered to insert the end of the tube 18 into the dispension vessel 21, the pressing roller 35 is lowered while rotating to squeeze the tube 18, whereby the serum 23 is discharged into the dispension vessel 21. Other movements are the same as in Example 1.

It is also possible to instal a number of the apparatus of Example 2 and dispense a number of samples at the same time.

## Example 3

When the pressurizing device 9 changes places with the tube-pressing back device 3, the same effect as in Example 1 can be accomplished. The tube-conveying rollers 1 may be provided at a lower portion without any problem.

Further, when the liquid surface 33 in the liquid container 19 is always constant, the ultrasonic sensor 32 is not required.

In order to prevent sucking of precipitates at a lower portion of the serum 23 caused by inserting the end of the tube 18 into the serum 23 deeply, it is also possible that the tube 18 is inserted not so deeply but shallowly from the liquid surface 33, and when sucking is started, the moving frame portion 26 is lowered gradually while watching a sucked amount.

In that case, the pressurizing cylinder 10 which operates the pressurizing device 9 can be changed to a driving system which is controlled by a pulse motor, if necessary.

In either of Examples 1 to 3, not only one dispension but also a number of dispensions in small amounts in a number of the dispension vessels 21 can be carried out.

That is, by moving the rack 6 up and down each time depending on the respective amounts to be dispensed, dispensions in a number of the dispension vessels 21 can be carried out.

Example 1 is an example of clinical inspection and also shows a specific example of blood inspection so that the liquid container 19 is already charged with blood to be tested when movements are started. However, the present invention is expected to be used for dispensing not only blood but also a reagent, a sample or any liquid and sampling them.

The apparatus of the present invention is constructed as described above so that troubles such as leakage of air caused by fitting a sampling chip to a nozzle which is directly connected to a cylinder in the prior art are not caused, whereby difference in sucked amounts is small and dispension with high precision can be carried out.

Further, a tube prepared by, for example, extrusion molding is inexpensive as compared with a conventional sampling chip prepared by an injection molding system.

Further, as compared with a conventional sucking system using a cylinder, the system of the present invention is easy in the point of manufacture precision and extremely inexpensively because of its mechanism.

In the prior art, sampling chips are generally put into a chip rack mostly by hands so that much labor is required.

When this operation is automated, an apparatus for that purpose is extremely expensive and is not economical.

To the contrary, according to the present invention, such operation is not required, and it is merely required to set a tube wound in a reel state in a continuous form to a tube-feeding axis. Thus, the tube can be set within a very short time by simple operation and is extremely economical.

Most of conventional various automated analyzers use a washing type nozzle system as a sampling mechanism. That is, an end of a sampling nozzle is not replaced but washed each time after a sample to be tested is sampled so that there is a problem in preventing contamination, but by employing the system of the present invention, it is possible to provide a liquid-dispensing apparatus which is inexpensive and completely free from contamination.

**Claims**

1. A liquid-dispensing apparatus comprising:

a tube (18) made of an elastic material;
a guide (4) through which the elastic tube (18) is slidable in a downward direction;
means (26) for lowering and raising the guide (4);
a tube choking means (2);
a tube cutting means (11, 12) serving to cut off a used length of said tube; and
a tube-squeezing means (3, 7, 9) below said tube choking means and adapted for squeezing an extent of the elastic tube (18) to expel air therefrom before the lower end of the tube (18) has been moved downwardly into a liquid container (19); and adapted to release the squeezing effect after the lower end of the tube (18) has descended into the liquid in the liquid container to draw liquid up into the tube (18);

**characterized in that**

said guide (4) is in the form of a tube nozzle portion (4);
said means (26) for lowering and raising the tube nozzle portion (4) comprises a frame portion (26) on which is mounted said tube nozzle portion (4);
means for moving said frame portion (26) up and down , and from side to side;
tube-feeding means which holds and feeds the tube of elastic material from a reel (17), around which the tube (18) is wound, to tube conveying means (1);
said tube-squeezing means (3, 7, 9) and said tube conveying means (1) being mounted on said frame portion (26);
said dispensing apparatus additionally comprising a liquid container conveying means which holds a liquid container (19) and is capable of positioning the liquid container (19) under the tube nozzle portion (4).

2. The apparatus according to Claim 1, wherein the tube-squeezing means has a squeezing amount-setting means by which a squeezing amount of the tube (18) can be changed.

3. The apparatus according to Claim 1 or 2, wherein the liquid container-conveying means is equipped with a sensor (32) which detects a liquid surface in the liquid container (19), gives information to the moving frame portion (26) and so controls a moving amount of the moving frame portion (26) that an end of the tube (18) is positioned at a desired position from the liquid surface.

4. The apparatus according to any of the preceding Claims, wherein the tube-squeezing means comprises a tube-pressing back device (3) and a tube-pressing device (7), and the tube (18) is introduced therebetween, and pressed and released by operations of a pressurizing device (9) which is linked to a pressurizing cylinder (10) and the tube-pressing device (7).

5. The apparatus according to Claim 4, wherein a rack (6) is further provided at an upper portion of the tube-pressing device (7) and engaged with a pinion (5) which is driven by a pinion-driving portion (8).

6. The apparatus according to Claim 5, wherein a sliding portion (14) is provided on the side of the tube-pressing device (7) which slides on a sliding rail (13) of the pressurizing device (9) to move the tube-pressing device (7) up and down.

7. The apparatus according to any of the preceding Claims, wherein the tube-cutting means (11) is linked to a cutting air cylinder (12) each time after predetermined dispensing movements, and a cut tube is discarded into a discarded-tube container (30).

8. The apparatus according to Claim 7, wherein the tube-cutting means (11) is a hot wire cutting means or a laser beam cutting means.

9. The apparatus according to Claim 6, wherein the tube-conveying rollers (1), the tube-choking means (2), the tube-pressing back device (3), the nozzle portion (4), the pinion (5), the tube-pressing device (7), the pinion-driving portion (8), the pressurizing device (9), the pressurizing cylinder (10), the cutting means (11), a cutting air cylinder (12) and a photosensor (15) are provided on the moving fram portion (26).

10. A liquid-dispensing apparatus comprising:

a tube (18) made of elastic material; a guide (4) through which said elastic tube (18) is slidable in a downward direction; means (26) for lowering and raising the guide (4); a tube cutting means (11, 12) serving to cut off a used length of said tube (18); a tube-squeezing means adapted for squeezing an extent of the elastic tube (18) to expel air therefrom before the lower end of the tube (18) has been moved downwardly into a liquid container (19); and adapted to release the squeezing effect after the lower end of the tube (18) has descended into the liquid in the liquid container (19) to draw liquid up into the tube (18);

**characterized in that**

said guide (4) is in the form of a tube nozzle portion (4); said tube-squeezing means includes a pressing roller (35) capable of rolling along a portion of the elastic tube length to expel air therefrom; and adapted to roll along said portion of the elastic tube length in a reverse direction to draw liquid up into said tube (18); said means (26) for lowering and raising the tube nozzle portion (4) comprises a frame portion (26) on which is mounted said tube nozzle portion (4); means for moving said frame portion (26) up and down, and from side to side; tube-feeding means which holds and feeds the tube of elastic material from a reel (17), around which said tube (18) is wound, to tube conveying means (1); said tube-squeezing means and said tube conveying means (1) being mounted on said frame portion (26); said dispensing apparatus additionally comprising a liquid container conveying means adapted to hold a liquid container (19) under the tube nozzle portion (4).

**Patentansprüche**

1. Flüssigkeitsabgabevorrichtung, umfassend:

ein Rohr (18), das aus einem elastischen Material hergestellt ist; eine Führung (4), durch die das elastische Rohr (18) in eine Richtung nach unten verschiebbar ist; Mittel (26) zum Absenken und Anheben der Führung (4); ein Rohrdrosselmittel (2); ein Rohrschneidmittel (11, 12), das dazu dient, eine gebrauchte Länge von dem Rohr abzuschneiden; und ein Rohrzusammendrückungsmittel (3, 7, 9) unter dem Rohrdrosselmittel, und das zum Zusammendrücken eines Bereichs des elastischen Rohres (18) angepaßt ist, um Luft daraus herauszutreiben, bevor das untere Ende des Rohres (18) nach unten in einen Flüssigkeitsbehälter (19) bewegt ist; und das angepaßt ist, die Zusammendrückkraft zu lösen, nachdem das untere Ende des Rohres (18) in die Flüssigkeit in dem Flüssigkeitsbehälter abwärts bewegt ist, um Flüssigkeit nach oben in das Rohr (18) zu ziehen;

**dadurch gekennzeichnet, daß**

die Führung (4) die Form eines Rohrdüsenabschnitts (4) aufweist;

das Mittel (26) zum Absenken und Anheben des Rohrdüsenabschnitts (4) einen Rahmenabschnitt (26) umfaßt, an dem der Rohrdüsenabschnitt (4) angebracht ist;

Mittel zum Bewegen des Rahmenabschnitts (26) nach oben und unten und von Seite zu Seite;

ein Rohrzuführungsmittel, das das Rohr aus elastischem Material hält und von einer Haspel (17), um die das Rohr (18) gewickelt ist, zu einem Rohrfördermittel (1) zuführt;

wobei das Rohrzusammendrückungsmittel (3, 7, 9) und das Rohrfördermittel (1) an dem Rahmenabschnitt (26) angebracht sind;

die Abgabevorrichtung zusätzlich ein Flüssigkeitsbehälterfördermittel umfaßt, das einen Flüssigkeitsbehälter (19) hält und den Flüssigkeitsbehälter (19) unter dem Rohrdüsenabschnitt (4) positionieren kann.

2. Vorrichtung nach Anspruch 1, dadurch gekennzeichnet, daß das Rohrzusammendrückungsmittel ein Zusammendrückungsausmaß-Einstellmittel aufweist, durch das ein Zusammendrückungsausmaß des Rohres (18) verändert werden kann.

3. Vorrichtung nach Anspruch 1 oder 2, dadurch gekennzeichnet, daß das Flüssigkeitsbehälterfördermittel mit einem Sensor (32) ausgestattet ist, der eine Flüssigkeitsoberfläche in dem Flüssigkeitsbehälter (19) erfaßt, Information an den sich bewegenden Rahmenabschnitt (26) gibt und so ein Bewegungsausmaß des sich bewegenden Rahmenabschnitts (26) steuert, daß ein Ende des Rohres (18) an einer gewünschten Position von der Flüssigkeitsoberfläche positioniert ist.

4. Vorrichtung nach jedem der vorhergehenden Ansprüche, dadurch gekennzeichnet, daß das Rohrzusammendrückungsmittel eine Rohrrückdrückungseinrichtung (3) und eine Rohrzusammendrückungseinrichtung (7) umfaßt, und das Rohr (18) dazwischen eingeführt ist, und durch Betätigungen einer Druckerzeugungseinrichtung (9) zusammengedrückt und freigegeben wird, die mit einem Druckerzeugungszylinder (10) und der Rohrzusammendrückungseinrichtung (7) verbunden ist.

5. Vorrichtung nach Anspruch 4, dadurch gekennzeichnet, daß eine Zahnstange (6) weiterhin an einem oberen Abschnitt der Rohrzusammendrückungseinrichtung (7) vorgesehen und in Eingriff mit einem Ritzel (5) ist, das durch einen Ritzelantriebsabschnitt (8) angetrieben ist.

6. Vorrichtung nach Anspruch 5, dadurch gekennzeichnet, daß ein Gleitabschnitt (14) an der Seite der Rohrzusammendrückungseinrichtung (7) vorgesehen ist, der an einer Gleitschiene (13) der Druckerzeugungseinrichtung (9) gleitet, um die Rohrzusammendrückungseinrichtung (7) nach oben und unten zu bewegen.

7. Vorrichtung nach jedem der vorhergehenden Ansprüche, dadurch gekennzeichnet, daß das Rohrschneidmittel (11) mit einem Schneidluftzylinder (12) jedesmal nach vorbestimmten Abgabebewegungen verbunden ist, und ein abgeschnittenes Rohr in einem Rohrablegebehälter (30) ablegbar ist.

8. Vorrichtung nach Anspruch 7, dadurch gekennzeichnet, daß das Rohrschneidmittel (11) ein Hitzdrahtschneidmittel oder ein Laserstrahlschneidmittel ist.

9. Vorrichtung nach Anspruch 6, dadurch gekennzeichnet, daß die Rohrförderwalzen (1), die Rohrdrosselmittel (2), die Rohrrückdrückungseinrichtung (3), der Düsenabschnitt (4), das Ritzel (5), die Rohrzusammendrückungseinrichtung (7), der Ritzelantriebsabschnitt (8), die Druckerzeugungseinrichtung (9), der Druckerzeugungszylinder (10), das Schneidmittel (11), ein Schneidluftzylinder (12) und ein Photosensor (15) an dem sich bewegenden Rahmenabschnitt (16) vorgesehen sind.

10. Flüssigkeitsabgabevorrichtung, umfassend:

ein Rohr (18), das aus einem elastischen Material hergestellt ist;

eine Führung (4), durch die das elastische Rohr (18) in eine Richtung nach unten verschiebbar ist;

Mittel (26) zum Absenken und Anheben der Führung (4);

ein Rohrschneidmittel (11, 12), das dazu dient, eine gebrauchte Länge des Rohres (18) abzuschneiden;

ein Rohrzusammendrückungsmittel, das zum Zusammendrücken eines Bereichs des elastischen Rohres (18) angepaßt ist, um Luft daraus herauszutreiben, bevor das untere Ende des Rohres (18) nach unten in einen Flüssigkeitsbehälter (19) bewegt ist; und das angepaßt ist, die Zusammendrückkraft zu lösen, nachdem das untere Ende des Rohres (18) in die Flüssigkeit in dem Flüssigkeitsbehälter (19) abwärts bewegt ist, um Flüssigkeit nach oben in das Rohr (18) zu ziehen;

**dadurch gekennzeichnet, daß**

die Führung (4) die Form eines Rohrdüsenabschnitts (4) aufweist;

das Rohrzusammendrückungsmittel eine Druckwalze (35) umfaßt, die entlang eines Abschnitts der Länge des elastischen Rohres rollen kann, um Luft daraus herauszutreiben; und die angepaßt ist, entlang des Abschnitts der Länge des elastischen Rohres in eine entgegengesetzte Richtung zu rollen, um Flüssigkeit nach oben in das Rohr (18) zu ziehen; das Mittel (26) zum Absenken und Anheben des Rohrdüsenabschnitts (4) einen Rahmenabschnitt (26) umfaßt, an dem der Rohrdüsenabschnitt (4) angebracht ist; Mittel zum Bewegen des Rahmenabschnitts (26) nach oben und unten und von Seite zu Seite; ein Rohrzuführungsmittel, das das Rohr aus elastischem Material hält und von einer Haspel (17), um die das Rohr (18) gewickelt ist, zu einem Rohrfördermittel (1) zuführt; wobei das Rohrzusammendrückungsmittel und das Rohrfördermittel (1) an dem Rahmenabschnitt (26) angebracht sind; die Abgabevorrichtung zusätzlich ein Flüssigkeitsbehälterfördermittel umfaßt, das angepaßt ist, einen Flüssigkeitsbehälter (19) unter den Rohrdüsenabschnitt (4) zu halten.

**Revendications**

1. Appareil de distribution de liquide comprenant :

   un tube (18) fait d'un matériau élastique ;
   un guide (4) à travers lequel le tube élastique (18) peut glisser dans une direction vers le bas ;
   des moyens (26) pour abaisser et relever le guide (4) ;
   un moyen pour étrangler le tube (2) ;
   un moyen pour couper le tube (11, 12) servant à couper une longueur usée dudit tube ; et
   un moyen pour comprimer le tube (3, 7, 9) au-dessous dudit moyen pour étrangler le tube et adapté pour comprimer une extension du tube élastique (18) afin d'expulser l'air de celui-ci avant que l'extrémité inférieure du tube (18) ait été déplacée vers le bas dans un récipient à liquide (19) ; et adapté pour libérer l'effet de compression après que l'extrémité inférieure du tube (18) soit descendue dans le liquide dans le récipient à liquide pour prélever du liquide dans le tube (18) ;

   caractérisé en ce que

   ledit guide (4) est dans la forme d'une portion de buse de tube (4) ;
   lesdits moyens (26) pour abaisser et relever la portion de buse de tube (4) comprennent une portion de cadre (26) sur laquelle est montée ladite portion de buse de tube (4) ;
   des moyens pour déplacer ladite portion de cadre (26) vers le haut et vers le bas, et d'un côté vers un autre côté ;
   un moyen d'alimentation en tube qui supporte et alimente le tube de matériau élastique à partir d'une bobine (17), autour de laquelle est enroulé le tube (18), vers un moyen de transport de tube (1);
   ledit moyen de compression de tube (3, 7, 9) et ledit moyen de transport de tube (1) étant montés sur ladite portion de cadre (26) ;
   ledit appareil de distribution comprenant de plus un moyen de transport de récipient à liquide qui porte un récipient à liquide (19) et qui est capable de positionner le récipient à liquide (19) sous la portion de buse de tube (4).

2. Appareil selon la revendication 1, dans lequel le moyen pour comprimer un tube possède un moyen de réglage de quantité de compression grâce auquel une quantité de compression du tube (18) peut être modifiée.

3. Appareil selon la revendication 1 ou 2, dans lequel le moyen de transport de récipient à liquide est équipé avec un détecteur (32) qui détecte une surface de liquide dans le récipient à liquide (19), qui donne une information à la portion de cadre mobile (26) et qui commande ainsi une quantité de mouvement de la portion de cadre mobile (26) de sorte qu'une extrémité du tube (18) est positionnée à une position souhaitée à partir de la surface du liquide.

4. Appareil selon l'une quelconque des revendications précédentes, dans lequel le moyen de compression de tube comprend un dispositif de contre-pression de tube (3) et un dispositif de compression de tube (7), et le tube (18) est introduit entre eux, et est comprimé et libéré par des fonctionnements d'un dispositif de mise sous pression (9) qui est relié à un cylindre de mise sous pression (10) et au dispositif de compression de tube (7).

5. Appareil selon la revendication 4, dans lequel une crémaillère (6) est de plus fournie à une portion supérieure du dispositif de compression de tube (7) et en prise avec un pignon (5) qui est commandé par une portion de commande de pignon (8).

6. Appareil selon la revendication 5, dans lequel une portion coulissante (14) est prévue sur le côté du dispositif de compression de tube (7) qui coulisse sur un rail de coulissement (13) du dispositif de mise sous pression (9) pour déplacer le dispositif de compression de tube (7) vers le haut et vers le bas.

7. Appareil selon l'une quelconque des revendications précédentes, dans lequel le moyen de coupe de tube (11) est relié à un vérin pneumatique de coupe (12) chaque fois après des mouvements de distribution prédéterminés, et un tube coupé est jeté dans un récipient de tubes jetés (30).

**8.** Appareil selon la revendication 7, dans lequel le moyen de coupe de tube (11) est un moyen de coupe à fil chaud ou un moyen de coupe à rayon laser.

**9.** Appareil selon la revendication 6, dans lequel les rouleaux de transport de tube (1), le moyen d'étranglement de tube (2), le dispositif de contre-pression de tube (3), la portion de buse (4), le pignon (5), le dispositif de compression de tube (7), la portion de commande de pignon (8), le dispositif de mise sous pression (9), le cylindre de mise sous pression (10), le moyen de coupe (11), un vérin pneumatique de coupe (12) et un photo-détecteur (15) sont prévus sur la portion de cadre mobile (26).

**10.** Appareil de distribution de liquide comprenant :

un tube (18) fait d'un matériau élastique ;
un guide (4) à travers lequel ledit tube élastique (18) peut glisser dans une direction vers le bas ;
des moyens (26) pour abaisser et relever le guide (4) ;
un moyen de coupe de tube (11, 12) servant à couper une longueur usée dudit tube (18);
un moyen de compression de tube adapté pour comprimer une extension du tube élastique (18) afin d'expulser l'air de celui-ci avant que l'extrémité inférieure du tube (18) soit déplacée vers le bas dans un récipient à liquide (19) ; et adapté pour libérer l'effet de compression après que l'extrémité inférieure du tube (18) soit descendue dans le liquide dans le récipient à liquide (19) afin de prélever du liquide dans le tube (18) ;

caractérisé en ce que

ledit tube (4) est sous la forme d'une portion de buse de tube (4) ;
ledit moyen de compression de tube comprend un rouleau de compression (35) capable de rouler le long d'une portion de la longueur du tube élastique afin d'expulser l'air de celui-ci ; et adapté pour rouler le long de ladite portion de la longueur de tube élastique dans une direction inverse pour prélever du liquide dans ledit tube (18) ;
lesdits moyens (26) pour abaisser et relever la portion de buse de tube (4) comprennent une portion de cadre (26) sur laquelle est montée ladite portion de buse de tube (4) ;
des moyens pour déplacer ladite portion de cadre (26) vers le haut et vers le bas, et d'un côté vers un autre côté ;
un moyen d'alimentation de tube qui supporte et alimente le tube de matériau élastique à partir d'une bobine (17), autour de laquelle ledit tube (18) est enroulé, vers le moyen de transport de tube (1) ;
ledit moyen de compression de tube et ledit moyen de transport de tube (1) étant montés sur ladite portion de cadre (26) ;
ledit appareil de distribution comprenant de plus un moyen de transport de récipient à liquide adapté pour porter un récipient à liquide (19) sous la portion de buse de tube (4).

# Fig. 1

# Fig. 2

A-A'
Sectional View

# Fig. 3

# Fig. 4

# Fig. 5

# Fig. 6

# Fig. 7

# Fig. 8

# Fig. 9

# Fig. 10

# Fig. 11